**Europäisches Patentamt**

(19) **European Patent Office**

**Office européen des brevets**

(11) Numéro de publication: **0 165 889**
**B1**

(12) **FASCICULE DE BREVET EUROPEEN**

(45) Date de publication du fascicule du brevet:
**24.05.89**

(51) Int. Cl.⁴: **B 60 R 25/08**, B 60 T 17/16

(21) Numéro de dépôt: **85450012.1**

(22) Date de dépôt: **21.05.85**

(54) Dispositif antivol pour véhicules automobile agissant sur le circuit hydraulique de freinage.

(30) Priorité 01.06.84 FR 8408742

(43) Date de publication de la demande:
**27.12.85 Bulletin 85/52**

(45) Mention de la délivrance du brevet:
**24.05.89 Bulletin 89/21**

(84) Etats contractants désignés:
**AT BE CH DE FR GB IT LI LU NL SE**

(56) Documents cités:
**FR-A- 945 472**
**FR-A- 994 268**
**FR-A- 1 136 600**
**GB-A- 2 024 351**
**US-A- 2 601 909**
**US-A- 3 653 730**
**US-A- 3 656 574**
**US-A- 3 735 834**
**US-A- 3 800 279**
**US-A- 3 871 475**

(73) Titulaire Perret, Maurice, 11 Rue de la Résistance,
**F-31120 Pinsaguel (FR)**

(72) Inventeur. Perret, Maurice, 11 Rue de la Résistance,
**F-31120 Pinsaguel (FR)**

(74) Mandataire: **Ravina, Bernard, Cabinet Bernard
RAVINA 24, boulevard Riquet, F-31000 Toulouse (FR)**

## Description

La présente invention a pour objet un dispositif antivol pour véhicules automobiles qui agit sur le circuit de freinage pour permettre le blocage des roues et éviter tous déplacements.

On connaît des dispositifs antivols qui comportent outre le maître cylindre principal un second générateur d'énergie hydraulique et une électro-vanne qui assure la communication des freins hydrauliques du véhicule, soit avec le maître cylindre principal, soit avec ce second générateur.

Un tel dispositif est notamment décrit dans le brevet US-A-3 800 279, conformément au préambule de la revendication 1 de la présente invention.

L'électrovanne utilisée est du type deux voies, trois orifices. Deux de ces orifices sont des orifices d'entrée et sont respectivement connectés au maître cylindre principal et au second générateur par l'intermédiaire de conduites hydrauliques appropriées. Le troisième orifice ou orifice de sortie est connecté aux conduites des freins.

Cette électrovanne comporte un tiroir qui est déplacé par les électro-aimants d'une première position vers une seconde et d'une seconde position vers une première. Selon la première position, une communication n'est assurée qu'entre le maître principal et les freins tandis que, selon la seconde position, une communication n'est assurée qu'entre le second générateur et les freins.

Le déplacement du tiroir de l'électrovanne vers la seconde position est simultané à l'activation du second générateur, tandis que le déplacement du tiroir vers la première position coincide à la désactivation du second générateur.

Si pour une raison quelconque, par exemple une rupture du fil d'alimentation de l'électro-aimant, le tiroir ne peut être ramené en première position après désactivation du second générateur, le circuit de freinage sera dépressurisé et ne pourra pas être pressurisé par le maître cylindre principal puisque la liaison hydraulique entre ce dernier et les freins sera interrompu par le tiroir de l'électrovanne. On conçoit qu'un mauvais fonctionnement de ce dispositif antivol peut conduire à la perte de l'usage des freins du véhicule.

La présente invention a pour objet notamment de pallier l'inconvénient sus-évoqué.

A cet effet, le dispositif antivol conforme à la présente invention, est défini par les caractéristiques de la revendication 1.

Selon une autre caractéristique de l'invention, le dispositif antivol est doté d'un moyen de temporisation pour limiter la durée de blocage des roues du véhicule par le second générateur hydraulique. Ce second moyen de temporisation détermine ainsi la durée d'un cycle de blocage des roues qui cesse au terme d'un délai prédéterminé si entretemps, le circuit de surveillance n'a pas reçu une autre information représentative, soit d'un usage non autorisé, soit d'une effraction; auquel cas, ce cycle est réactualisé.

D'autres avantages et caractéristiques de l'invention apparaîtront à la lecture de la description d'une forme préférentielle de réalisation donnée à titre d'exemple non limitatif en se référant aux dessins annexés en lesquels:

– la figure 1 est une vue schématique du fonctionnement du dispositif,

– les figures 2 et 3 sont des vues en coupe longitudinale du dispositif selon l'invention,

– la figure 4 est une vue en coupe transversale du dispositif selon l'invention,

– la figure 5 est un schéma du circuit de surveillance.

Tel que représenté, le dispositif antivol pour véhicules selon l'invention agit sur le circuit de freinage pour bloquer les roues.

Ce circuit de freinage est constitué par un générateur d'énergie hydraulique ou maître cylindre 1 connecté aux organes hydrauliques des freins 2 du véhicule par l'intermédiaire d'une conduite principale T et de conduites secondaires T'. La conduite principale T est connectée, d'une part, au maître cylindre et d'autre part, aux conduites secondaires. Ces conduites secondaires sont connectées aux organes hydrauliques des quatre freins 2 du véhicule.

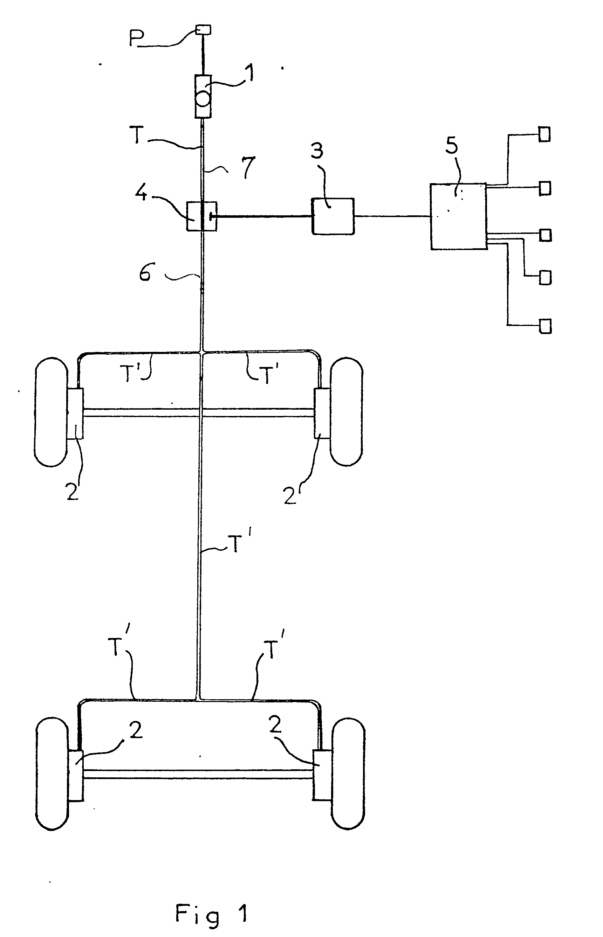

Le dispositif antivol comprend un second générateur 3 d'énergie hydraulique relié au circuit en aval du premier générateur et un moyen hydraulique 4 de sélection de circuit qui commute les organes récepteurs, c'est-à-dire les organes hydrauliques des freins 2, soit seulement avec le premier générateur 1 d'énergie hydraulique (figure 1). soit seulement avec le second générateur d'énergie hydraulique.

Cette dernière commutation est assurée lorsqu'un circuit de surveillance 5 détecte une information représentative d'un usage non autorisé du véhicule, lequel circuit de surveillance, dans ce cas, agit sur le second générateur 3 en sorte que ce dernier pressurise les freins du véhicule et assure le blocage des roues.

De plus, le dispositif de blocage est équipé d'un moyen de temporisation pour limiter la durée du blocage des roues du véhicule par le second générateur hydraulique.

Ce second moyen de temporisation détermine la durée d'un cycle de blocage des roues qui cesse au terme d'un délai prédéterminé si entretemps le circuit de surveillance n'a pas reçu une autre information représentative, soit d'un usage non autorisé, soit d'une effraction; auquel cas, ce cycle est réactualisé.

A titre d'exemple purement indicatif, la durée du cycle de blocage des roues est fixée à 15 mn.

On va expliquer le fonctionnement du dispositif antivol selon l'invention.

En figure 1, les conduites hydrauliques sont représentées en traits forts tandis que les liaisons électriques sont représentées en traits fins.

La figure 1 correspond à l'utilisation normale du circuit de freinage du véhicule.

Suivant cette figure, le moyen de sélection 4 interdit la communication du générateur 3 avec le circuit de freinage et assure la communication hydraulique du maître cylindre 1 avec les conduites T' et les organes hydrauliques de freins 2.

Ainsi, lorsqu'une poussée est exercée sur la pédale «P», cette pédale étant reliée mécaniquement au piston du maître cylindre 1, les conduites hydrauliques T, T' et les organes hydrauliques des freins 2 sond mis en pression, ce qui a pour effet de freiner le véhicule. Le relâchement de la pédale conduit au relâchement des freins 2.

Si le véhicule doit demarrer en stationnement, l'utilisateur active le circuit de surveillance 5. Si aucune effraction et aucun usage non autorisé ne se sont produits, le moyen de sélection 4 assure la communication du maître cylindre 1 avec les organes hydrauliques des freins 2 et interdit la communication du générateur 3 avec les conduites T' et les organes hydrauliques 2.

Par contre, après détection par le circuit 5 d'une information représentative d'un usage non autorisé du véhicule ou représentative d'une effraction de celui-ci; le moyen de sélection 4 commute les organes hydrauliques des freins 2 et les conduites T' avec le second générateur d'énergie hydraulique 3 en sorte de bloquer les roues. Il est à noter que suivant ce cas de figure, le maître cylindre 1 est isolé du circuit hydraulique, par le moyen de sélection 4.

On conçoit aisément que pour un véhicule en stationnement, les freins de celui-ci ne sont bloqués qu'après détection d'un usage non autorisé ou d'une effraction, et ceci pendant une durée déterminée par le premier moyen de temporisation. Cette disposition permet d'éviter la mise en pression du circuit hydraulique de freinage de manière permanente pendant toute la durée du stationnement.

Il y lieu de noter que le dispositif antivol assure le blocage des roues avec un temps de retard uniquement si le circuit de surveillance détecte l'ouverture d'une portière passager ou conducteur.

Ainsi, le conducteur habituel du véhicule dispose d'un délai raisonnable pour signaler sa présence au dispositif de surveillance, ce signalement de présence pouvant être effectué par délivrance d'un code au circuit de surveillance.

Si au terme de ce délai, le circuit de surveillance n'a pas reçu le code, les freins sont bloqués de la manière sus-évoquée. Il est à signaler que les freins sont bloqués immédiatement par le second générateur si pendant ce délai le conducteur met sous tension le circuit électrique du véhicule avant d'avoir introduit le code.

Ainsi, aucun freinage non volontaire ne pourra avoir lieu lorsque le véhicule est en marche. Les freins sont immédiatement bloqués si le dispositif de surveillance détecte l'ouverture du capot du moteur, du coffre à bagage ou s'il détecte la rotation des roues, le moteur étant à l'arrêt. Cette dernière caractéristique permet de bloquer les freins du véhicule lors d'une tentative de remorquage ou bien lors d'un relâchement du frein de parking pour un véhicule stationné sur une rue en pente.

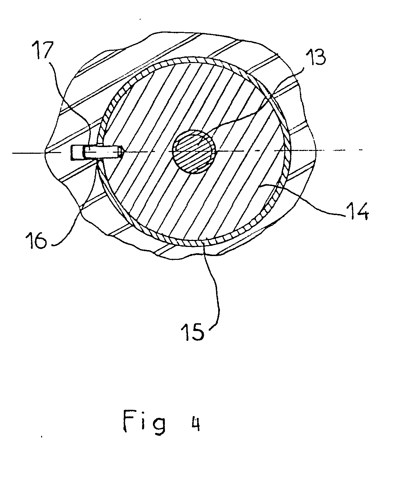

Selon un exemple préférentiel de réalisation représenté en figure 4, le dispositif selon l'invention est constitué par un sélecteur hydraulique 4 connecté sur le circuit hydraulique de freinage comportant un orifice 6 de sortie connecté par l'intermédiaire des conduites T' aux organes hydrauliques des freins 2, un premier orifice d'entrée 7 connecté par la conduite T au maître cylindre 1 et un second orifice d'entrée 8 connecté par une conduite hydraulique 9 au second générateur 3 d'énergie hdraulique lequel est constitué par un maître cylindre actionné par un organe moteur 10 alimenté en énergie par le circuit de surveillance 5.

Selon un exemple préférentiel de réalisation, le sélecteur hydraulique 4 est du type de ceux comportant un alésage interne 4A dans lequel se déplace un piston 11, du type de ceux comportant deux orifices opposés et en communication avec l'alésage 4A ces deux orifices constituant les deux orifices d'entrée 7 et 8 et du type de ceux comportant un orifice radial communiquant avec l'alésage 10, ce dernier orifice constituant l'orifice de sortie 6.

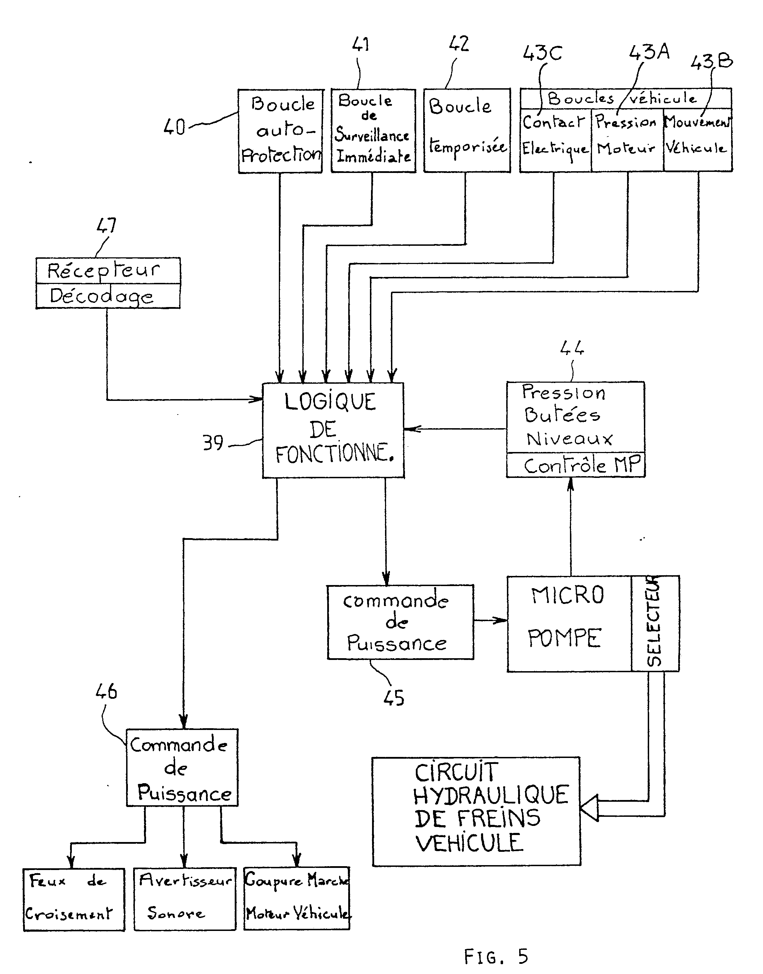

Le sélecteur de circuit tel que décrit assure la communication de l'orifice 6 soit avec l'orifice 8 selon que le piston est en position basse (figure 4) ou en position haute (figure 5).

L'avantage d'un tel sélecteur de circuit réside dans le fait que le déplacement du piston de la position basse vers la position haute et inversement n'est assuré que par l'effet de la poussée exercée, soit sur son extrémité inférieure, soit sur son extrémité supérieure par le fluide hydraulique chassé, soit du maître cylindre 3, soit du maître cylindre 1.

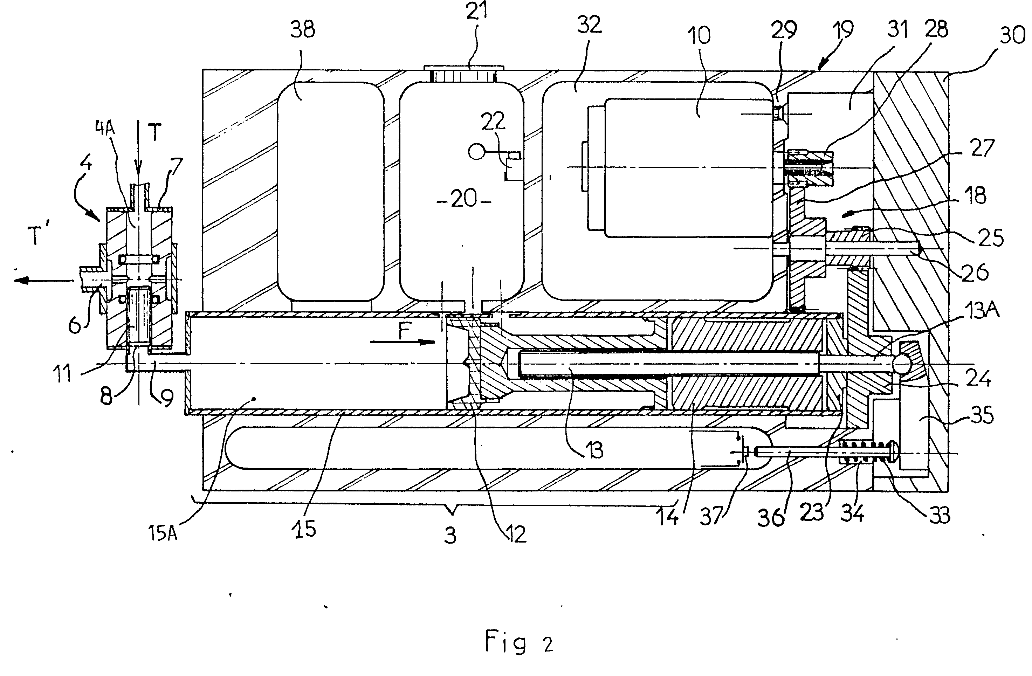

Ainsi, lorsque le piston 12 du maître cylindre 3 est déplacé dans le sens de la flèche F (figure 2) qui correspond à la mise sous pression des organes hydrauliques des freins 2, la communication entre l'orifice 8 et l'orifice 6 du sélecteur et par conséquent, la communication entre le maître cylindre 3 et les freins 2 s'effectue d'une manière automatique.

Après déplacement du piston du maître cylindre 3 dans le sens de la flèche F correspondant à la libération des freins 2 et lors du déplacement du piston du maître cylindre 1 dans le sens qui correspond à l'actionnement des freins 2, la communication entre l'orifice 7 et l'orifice 6 du sélecteur 4 et par conséquent, la communication entre le maître cylindre 1 et les freins 2 s'effectue également d'une manière automatique.

Il est bien évident que le sélecteur de circuit pourra être de tout type connu. C'est ainsi que le sélecteur de circuit pourra être constitué par une électro-vanne, deux voies, deux positions, trois orifices, dont le déplacement du tiroir est commandé par électro-aimant. Le déplacent dans un sens ou dans l'autre du piston 12 du maître cylindre 3 est assuré par l'organe moteur 10 par l'intermédiaire d'une transmission mécanique du type irréversible.

Un tel type de transmission présente l'avantage de permettre la coupure de l'alimentation de l'organe moteur 10 lorsque les conduites T' et les organes hydrauliques 2 sont mis sous pression par le maître cylindre 3 en raison du fait qu'elle s'oppose au déplacement du piston 12 dans le sens indiqué par la flèche F. Ainsi, le maintien du blocage des roues ne requiert aucune dépense d'énergie.

Selon la forme préférée de réalisation, l'organe moteur 10 est un moteur électrique du type de ceux dont le rotor peut être animé en rotation suivant un sens ou l'autre en fonction du sens de la tension électrique appliquée à son entrée. Cette tension électrique est délivrée par le circuit de surveillance 5. Ainsi, lorsque ce circuit a détecté une information représentative d'un usage non autorisé ou d'une effraction, le rotor du moteur tourne dans un sens.

Le rotor du moteur sera entraîné dans l'autre sens au terme du délai fixé par le moyen de temporisation à condition qu'une autre information représentative d'un usage non autorisé ou d'une effraction n'ait été délivrée au circuit de surveillance, ou bien pendant ce délai fixé par le premier moyen de temporisation, si le système de surveillance reçoit le code signalant la présence du conducteur habituel.

Par l'intermédiaire de la transmission mécanique, le mouvement de rotation de l'arbre de sortie du moteur est transformé en un mouvement de translation rectiligne communiqué au piston 12 du maître cylindre 3. Selon un exemple préférentiel de réalisation, la transmission mécanique est constituée par un écrou 14, solidaire du piston 12, bloqué en rotation et mobile en translation, et par une vis 13 entraînée en rotation par l'arbre de sortie du moteur 10. Il est bien évident que l'inclinaison du filet de l'écrou et de la vis est suffisamment faible pour répondre aux conditions d'irréversibilité.

Il a été préféré un tel type d'organe moteur et un tel type de transmission en raison du fait qu'ils permettent un déplacement progressif du piston 12 suivant le sens de la flèche F1 et par voie de conséquence, une montée progressive de la pression dans les conduites T' et les organes hydrauliques des freins 2.

Toujours dans le but d'amener progressivement en pression les conduites T' et les organes hydrauliques des freins 2, il est prévu un train d'engrenage 18 qui transmet à la vis 13 le mouvement de rotation de l'arbre de sortie du moteur 10 en démultipliant la vitesse de rotation du dit arbre.

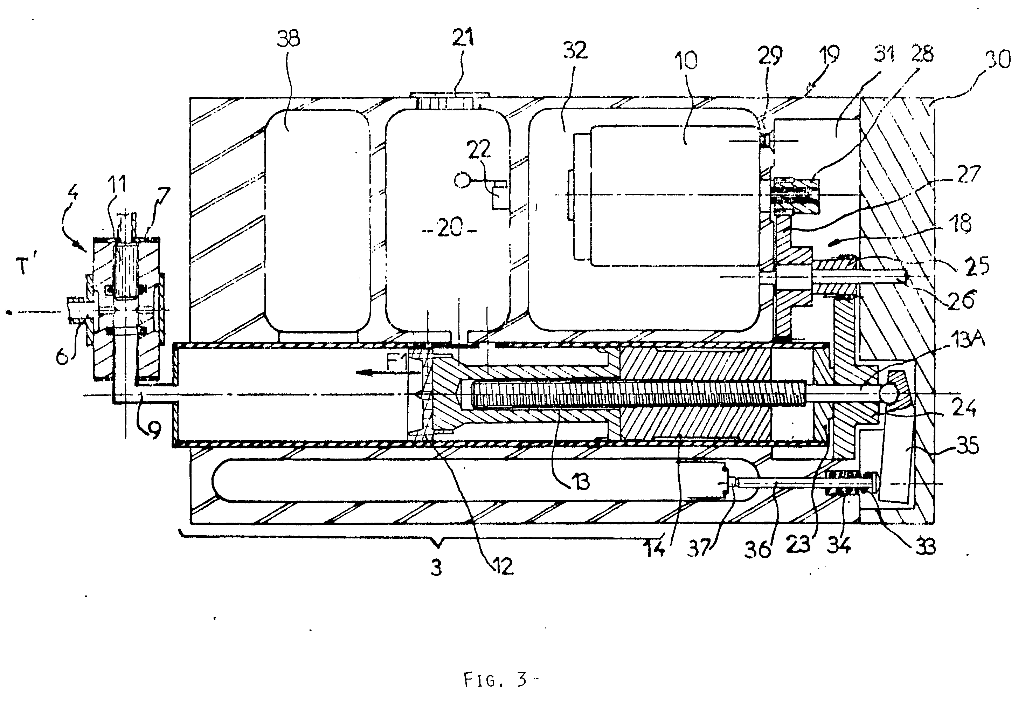

Comme représenté en figures 2 et 3, le générateur d'énergie hydraulique 3 est disposé dans un caisson 19 auto-protégé. Ce caisson comporte un évidement longitudinal cylindrique dans lequel se monte une chemise 15 qui reçoit le piston 12 du maître cylindre et l'écrou 14 de la transmission. Pour bloquer l'écrou en rotation, la paroi de la chemise est dotée d'une lumière dans laquelle coulisse un ergot 17 solidaire du dit écrou. La partie avant de la chemise 15 et le piston 12 définissent une chambre 15A qui reçoit un liquide de freinage approprié. Cette chambre 15A est en relation avec l'orifice 8 du sélecteur 4 par l'intermédiaire de la conduite 9.

De plus, cette chambre 15A est en relation avec une réserve 20 de liquide de freinage. Cette réserve 20 est ménagée dans le caisson 19 au-dessus de l'évidement longitudinal recevant la chemise 15.

Cette réserve 20 est en relation avec la chambre 15A et avec une gorge du piston 12 pratiquée en arrière de sa partie active, par l'intermédiaire d'un orifice pratiqué dans la paroi de l'évidement et d'un orifice et d'une gorge pratiquée dans la paroi de la chemise 15. Une telle disposition est connue en soi.

La réserve 20 comporte un bouchon 21 pour l'introduction du liquide de freinage. De préférence, la réserve 20 comporte un capteur de niveau connu en soi.

En arrière de l'écrou 14, la chemise 15 reçoit un palier lisse 23 dans lequel tourillonne la vis 13. Au-delà de son palier, la vis 13 présente une prolongation axiale 13A qui coopère avec le train d'engrenage 18.

Ce train d'engrenage est par exemple constitué par une première roue dentée 24 calée en rotation et en translation sur la prolongation 13A, par un pignon denté 25 en prise avec la roue dentée 24, le dit pignon denté étant monté en rotation sur un axe 26, par une seconde roue dentée 27 montée sur l'axe 26 et fixée axialement au pignon 25 et par un deuxième pignon denté 28 engrené avec la roue 27 et calé sur l'arbre de sortie du moteur 10. Selon la forme préférentielle de réalisation, l'axe 26 est monté par une de ses extrémités dans un orifice pratiqué dans une paroi verticale 29 du caisson 19 et par l'autre extrémité dans un orifice pratiqué dans une paroi verticale 30 amovible rapportée sur le caisson 19.

Le train d'engrenage 18 est disposé dans un évidement 31 limité par la paroi 29 et le paroi verticale 30.

Selon la forme préférentielle de réalisation, le moteur 10 est monté dans un évidement 32 pratiqué dans le caisson 19 en avant de la paroi 29. Ce moteur est fixé à cette paroi. Cette paroi est percée d'un orifice assurant la communication entre l'évidement 32 et l'évidement 31. Dans cet orifice est engagé l'arbre de sortie du moteur 10.

Avantageusement, le dispositif antivol est équipé de moyens pour limiter la pression dans les conduites T' et les organes hydrauliques des freins 2 lorsque ceux-ci sont pressurisés par le générateur d'énergie hydraulique 3.

A titre d'exemple purement indicatif, la pression hydraulique est limitée à vingt bars.

L'expérience a démontré que cette pression est celle suffisante pour interdire le démarrage du véhicule.

Selon la forme préférentielle de réalisation, les moyens pour limiter la pression à une valeur prédéterminée commandent l'interruption de l'alimentation de l'organe moteur 10 lorsque l'intensité de l'effort axial exercé par la vis 13 sur l'écrou 14, atteint une valeur prédéterminée, la valeur de cet effort étant celle qui correspond à la valeur de la pression sus-évoquée.

Dans ce but, la vis 13 est montée de manière à pouvoir se déplacer en translation par rapport à la chemise 15 et par rapport au palier 23 et les moyens pour limiter la pression sont constitués par une butée élastique déformable 33 qui exerce en direction de l'écrou 14 sur la prolongation 13A de la vis 13 un effort axial dont l'intensité dépend de sa déformation et par un capteur qui détecte un seuil de déformation de la butée et qui commande dans ce cas l'arrêt de l'organe moteur.

Selon la forme préférentielle de réalisation, la butée élastique 33 est constituée par un ressort à spires travaillant à la compression. Ce ressort est monté en partie dans un logement 34 du caisson 19 et exerce un effort axial sur la vis 13 par l'intermédiaire d'un levier 35. Ce levier 35 est monté dans une rainure pratiquée dans la paroi 30.

Pour détecter la déformation de la butée 33 en l'occurrence de la compression du ressort, il est prévu une tige 36, liée au levier 35, qui actionne un contact électrique 37. La tête de cette tige est maintenue appliquée sur le levier 35 par le ressort de compression 33. Le fonctionnement des moyens pour limiter la pression est le suivant: lorsque la vis est entraînée en rotation dans un sens qui correspond à l'avancement du piston 12 suivant la flèche F1, l'effort axial exercé sur cette dernière est suffisamment important pour s'opposer à tout mouvement de translation de celle-ci. Par contre, lorsque le piston et l'écrou ne peuvent plus se déplacer en raison de l'incompressibilité du liquide de freinage, la vis qui est animée en rotation est également animée d'un mouvement de translation.

Ce mouvement de translation s'effectue vers le levier 35. Ainsi, ce levier bascule, comprime le ressort 33 et pousse la tige 36 vers le contact 37 (figure 3). Il y a lieu de noter que l'effort axial appliqué sur la vis 13 par le levier 35 croît lorsque le ressort 33 se comprime et que cet effort appliqué sur la vis est reporté par l'intermédiaire de l'écrou 14 sur le piston 12. De cette façon, la pression du fluide hydraulique s'accroît tant que la vis 13 est entraînée en rotation et en translation, c'est-à-dire tant que le contact 37 n'est pas actionné par la tige 36 pour interrompre l'alimentation du moteur 10.

On conçoit qu'en ajustant l'écart entre le contact 37 et la tige 36, on ajuste la valeur de la pression maximale pouvant être délivrée par le maître cylindre 3. De préférence, le moteur 10 reste alimenté quelques secondes après détection de la tige 36 par le capteur 37.

Suivant cette disposition, il est nécessaire qu'aucun contact mécanique ne soit établi entre le capteur 37 et la tige 36. Pour cette raison, le capteur 37 est un interrupteur à lame souple et la tige 36 est aimantée. Au terme du délai établi par le premier moyen de temporisation, le moteur 10 est de nouveau alimenté et son arbre de sortie est animé d'un mouvement de rotation inverse du précédent. Dans ce cas, il y a lieu de noter que la vis 13 dégage tout d'abord la butée élastique 33 avant d'entraîner l'écrou en translation dans le sens correspondant à celui de la flèche F. La vis 13 n'entraînera l'écrou 14 que lorsque la roue dentée 24 est amenée en contact avec le palier 23.

Pour interrompre l'alimentation du moteur lorsque l'écrou 14 parvient en fin de course, il est prévu un contact électrique actionné par l'ergot 17.

Le circuit de surveillance 5 est alimenté par deux batteries électriques dont une, de capacité relativement élevée, est placée dans le compartiment moteur du véhicule et dont l'autre, de capacité plus réduite, est disposée dans un compartiment 38. De cette manière, si la première batterie est mise hors circuit, la seconde batterie protégée par le caisson 19 peut continuer à alimenter le circuit de surveillance.

Le circuit de surveillance 5 du dispositif antivol est constitué par:

– un ensemble électronique d'analyse et de commande 39 qui scrute au moins une bande auto-protection comportant un premier groupe de capteurs 40 associés au caisson 19 du dispositif, au moins une boucle de surveillance immédiate comportant un deuxième groupe de capteurs 41 associés au capot du moteur et au coffre à bagage, au moins une boucle temporisée comportant un troisième groupe de capteurs 42 associés à au moins une portière du véhicule, au moins une boucle de surveillance comportant un capteur 43A de pression hydraulique associé au moteur du véhicule, au moins une boucle de surveillance comportant un capteur 43B de mouvement associé à une des roues du véhicule et au moins une boucle de surveillance comportant un capteur 43C de courant électrique associé au circuit électrique du véhicule,

– un récepteur 47 de code associé électriquement à l'ensemble 39,

– un premier étage de commande de puissance 46 associé électriquement aux feux de croisement du véhicule et à l'avertisseur sonore et un second étage de commande en puissance 45 associé électriquement à l'ensemble 39 et au moteur 10.

De plus, l'ensemble 39 scrute l'état du détecteur 22 de niveau de liquide dans la réserve ainsi que l'état du capteur 37 et du capteur associé à l'ergot 17.

Il y a lieu de noter que l'étage de commande 45 est associé au premier moyen de temporisation. Selon une forme préférée de réalisation, le second étage de moyen est également associé à un moyen de temporisation. Ainsi, dès qu'une effraction ou un usage non autorisé sont détectés, l'avertisseur sonore ainsi que les feux de croisement sont alimentés en énergie électrique conjointement au blocage des roues.

De préférence, le temps pendant lequel l'avertisseur sonore et les feux de croisement sont alimentés est inférieur au temps pendant lequel le blocage des roues est assuré.

Selon une forme préférée de réalisation l'étage 46 est associé électriquement à un relais électrique susceptible d'assurer la coupure du circuit électrique d'alimentation de la bobine d'allumage. Cette coupure intervient lorsque cet étage 46 est commandé par l'ensemble 39 pour alimenter et l'avertisseur sonore et les feux de croisement. L'ensemble électronique 39 traite les informations qu'il reçoit des différentes boucles et déclenche les alarmes si nécessaire, ce déclenchement des alarmes se traduisant par la commande des étages de commande en puissance 46 et 45.

On va expliquer maintenant dans ses grandes lignes le fonctionnement du dispositif de surveillance. Lorsque le conducteur quitte son véhicule, le circuit 5 se met en veille automatiquement. Cette mise en veille s'effectue après que le contact ait été coupé, et que le véhicule et le moteur aient été arrêtés et ne devient effective que lorsque le dit circuit 5 détecte l'ouverture et la fermeture d'une même portière, c'est-à-dire lorsque le conducteur sort de son véhicule.

Il y a lieu de noter que pendant la veille automatique, une action sur un capteur du groupe de capteurs 40, 41, 43A, 43B, c'est-à-dire une action sur les capteurs autres que ceux disposés sur les boucles temporisées provoque immédiatement le déclenchement des alarmes. Il faut noter également qu'une action sur les capteurs 40 de la boucle auto-protection, que le circuit soit en veille ou pas, déclenche également les alarmes.

Le conducteur pour signaler sa présence au circuit de surveillance dispose d'un code. Ce code peut être introduit à partir d'un clavier ou à partir de tous moyens connus. Le conducteur dispose d'un délai prédéterminé pour signaler sa présence. Ce délai fixé par un moyen de temporisation, court à partir du moment où le conducteur a ouvert une portière pour pénétrer dans son véhicule. Le circuit de surveillance tel que décrit peut être commuté sur une position garage suivant laquelle il ne peut remplir sa fonction de surveillance. Il est à noter que suivant cette position garage, une action sur les capteurs 40 des boucles temporisées provoque le déclenchement des alarmes.

### Revendications

1. Dispositif antivol pour véhicules agissant sur le circuit de freinage, le circuit de freinage comportant un premier générateur d'énergie hydraulique (1) connecté par l'intermédiaire d'une conduite (T) et de conduites (T') aux freins du véhicule, le dit dispositif étant équipé d'un second générateur hydraulique (3) pour pressuriser les freins et d'un sélecteur (4) de circuit hydraulique qui est connecté par son orifice de sortie (6), aux freins (2) via les conduites (T'), par son premier orifice d'entrée (7) au maître cylindre principal via la conduite (T) et par son second orifice d'entrée (8) via une conduite hydraulique au second générateur, ce dit moyen de sélection assurant la commutation du circuit des freins (2), soit avec le premier générateur (1), soit avec le second générateur (3), dispositif antivol caractérisé en ce que le sélecteur (4) de circuit comprend un alésage (4A) dans lequel est monté un piston (11), que les deux orifices d'entrée (7) et (8) sont opposés et débouchent axialement dans l'alésage (4A) respectivement à l'une et l'autre extrémité et que l'orifice de sortie (6) est radial à cet alésage et débouche dans ce dernier, de façon à ce que le liquide provenant de l'un des générateurs (1, 3) déplace le piston (11) pour interdire l'entrée du liquide provenant de l'autre générateur (3, 1) de manière à assurer la commutation automatique du liquide provenant du générateur actionné vers les freins (2) du véhicule, le second générateur (3) étant commandé par un circuit de surveillance (5) lorsque ce dernier détecte un usage non autorisé du véhicule.

2. Dispositif antivol selon la revendication 1, caractérisé par un moyen de temporisation pour limiter la durée du blocage des roues du véhicule par le second générateur (3).

3. Dispositif antivol selon la revendication 1, caractérisé en ce que le second générateur (3) est constitué par un maître cylindre actionné par une transmission mécanique irréversible couplée à un moteur électrique (10) alimenté en énergie par le circuit de surveillance, la dite transmission transformant le mouvement de rotation de l'organe moteur en un mouvement de translation qui est communiqué au piston (12) du dit maître cylindre.

4. Dispositif antivol selon la revendication 3, caractérisé en ce que la transmission mécanique est du type à vis (13) et écrou (14), ce dernier étant solidaire du piston (12), en sorte de permettre une montée progressive de la pression dans le circuit de freinage.

5. Dispositif antivol selon la revendication 1, caractérisé par des moyens (33, 37) pour limiter la pression dans les organes hydrauliques des freins (2) lorsque ceux-ci sont pressurisés par le second générateur (3).

6. Dispositif antivol selon la revendication 4, caractérisé en ce que le dit écrou (14) et le dit piston (12) sont montés dans une chemise (15) qui reçoit un palier (23) pour la vis (13) et en ce que la dite vis (13) est montée de manière à pouvoir se déplacer en translation par rapport à la chemise (15) et au palier (23).

7. Dispositif antivol selon la revendication 5, caractérisé en ce que les dits moyens pour limiter la pression sont constitués par une butée élastique déformable (33) qui exerce en direction de l'écrou (14), sur une prolongation axiale (13A) de la vis (13), un effort axial dont l'intensité dépend de sa déformation et par un capteur (37) qui détecte un seuil de déformation de la butée et qui commande dans ce cas l'arrêt de l'organe moteur (10).

8. Dispositif antivol selon la revendication 1, 3, caractérisé en ce que le maître cylindre du second générateur (3), la transmission irréverible et l'organe moteur sont montés dans un caisson (19) lequel est doté d'une réserve (20) de liquide de freinage en communication avec la chambre (15A) du dit maître cylindre.

9. Dispositif antivol selon la revendication 1, caractérisé en ce que le circuit de surveillance (5) est constitué par:

– un ensemble électronique (39) d'analyse et de commande qui scrute au mons une boucle auto-protection comportant un premier groupe de capteurs (40) associé au caisson (19) du dispositif, au moins une boucle de surveillance immédiate comportant un deuxième groupe de capteurs (41) associé au capot du moteur et au coffre à bagages, au moins une boucle temporisée comportant un troisième groupe de capteurs (42) associé à au moins une portière du véhicule, au moins une boucle de surveillance comportant un capteur (43A) de pression hydraulique associé au moteur du véhicule, au moins une boucle de surveillance comportant un capteur (43B) de mouvement associé à une des roues du véhicule et au moins une boucle de surveillance comportant un capteur (43C) de courant électrique associé au circuit électrique du véhicule,

– un récepteur (47) de code associé électriquement à l'ensemble électronique (39),

– un premier étage de commande de puissance (46) associé électriquement à l'ensemble électronique (39) et relié aux feux de croisement du véhicule et à l'avertisseur et un second étage de commande en puissance (45) associé électriquement à l'ensemble électronique (39) et au moteur (10) du maître cylindre du second générateur (3).

## Claims

1. Anti-theft device for vehicles acting on the braking circuit to immobilize the wheels, the hydraulic braking circuit comprising a generator of hydraulic energy (1) connected by the intermediary of hydraulic conduits (T and T') to the brakes of the vehicle; the said device being equipped with a second generator of hydraulic energy (3) to pressurize the brakes and with a selection means (4) of hydraulic circuit which is connected by its outlet port (6) to the brakes (2) via the conduits (T') and by its first inlet port (7) to the main master cylinder via the conduit (T) and by its second inlet port (8) to the second generator via a hydraulic conduit. The said selection means assures the switching of the brake circuit (2) either with the first generator (1) or with the second generator (3). This anti-theft device is characterized in that the said selector (4) comprises an internal bore (4A) in which is placed a piston (11). Both inlet openings (7) and (8) are opposed to each other and communicate axially to the bore (4A) respectively to the first and second extremity. A radial opening communicates with the bore, this latter opening constituting the outlet port (6). The fluid coming from one of the generators (1, 3) moves the piston (11) to prevent the fluid coming from the other generator (3, 1) from entering so as to assure the automatic switching of the braking fluid coming from the actuated generator to the brakes (2) of the vehicle. The second generator (3) is controlled by a surveillance circuit (5) when the latter detects an unauthorized usage of the vehicle.

2. Anti-theft device according to claim 1 comprising a delaying means to limit the duration of the blocking of the wheels by the second generator (3).

3. Anti-theft device according to claim 1 comprising a second generator (3) constituted by a master cylinder actuated by an irreversible mechanical transmission connected to an electric motor (10) supplied by the surveillance circuit. The said transmission transforms the rotational motion of the motor mechanism into a translational motion which is then communicated to the piston (12) of the master cylinder.

4. Anti-theft device according to claim 3, characterized in that the mechanical transmission is of the type having a male screw (13) and female screw (14), this latter being integral with the piston (12) so as to permit a progressive increase of the pressure in the braking circuit.

5. Anti-theft device according to claim 1 comprising means (33, 37) to limit the pressure in the hydraulic devices of the brakes (2) when the latter are pressurized by the second generator.

6. Anti-theft device according to claim 4, characterized in that the female screw (14) and the said piston (12) are mounted in a casing (15) which receives a bearing (23) for the male screw (13) and characterized in that the said screw (13) is mounted so as to be displaceable in translation with respect to the casing (15) and to the bearing (23).

7. Anti-theft device according to claim 5, characterized in that the means to limit the pressure are constituted by a deformable elastic support (33) which exerts, on an axial extension (13A) of the male screw (13), an axial force the intensity of which depends on its deformation and by a recorder (37) which detects a threshold of deformation of the support and which controls in this case the stoppage of the motor mechanism (10).

8. Anti-theft device according to claim 1 and 3, characterized in that the master cylinder of the second generator (3), the irreversible transmission and the motor mechanism are mounted in a housing (19) which is provided with a reservoir (20) for braking fluid which reservoir is in communication with the chamber (13A) of the said master cylinder.

9. Anti-theft device according to claim 1, characterized in that the surveillance circuit (5) is constituted by:

– An electronic analysis and control assembly which scrutinizes at least one auto-protection band comprising a first collector cluster (40) associated with the housing (19) of the device, at least one proximate surveillance loop comprising a second group of collectors (41) associated with the hood of the engine and with the baggage trunk, at least one delayed loop comprising a third group of collectors (42) associated with at least one door of the vehicle, at least one surveillance loop comprising a collector (43A) of hydraulic pressure associated with the engine of the vehicle, at least one surveillance loop comprising a collector (43B) of movement associated with one of the wheels of the vehicle and at least one surveillance loop comprising a collector (43C) of electrical current associated with the electrical circuit of the vehicle.

– A code receiver (47) electrically associated with the assembly (39).

– A first stage of power control (46) electrically associated to the electronic system (39) and connected to the dipped headlights and to the hooter and a second power control stage (45) electrically

associated with the electronic assembly (39) and with the motor (10) of the master cylinder of the second generator (3).

**Patentansprüche**

1. Direkt mit dem Bremskreis gekoppelte Diebstahlsicherung für Kraftfahrzeuge. Der Bremskreis beinhaltet einen ersten hydraulischen Energiegenerator (1) der mittels einer Leitung (T) und einer Leitung (T') mit den Bremsen des Fahrzeugs verbunden ist. Die genannte Vorrichtung ist mit einem zweiten hydraulischen Generator ausgerüstet (3) um die Bremsen unter Druck zu setzen, und besitzt außerdem im hydraulischen Kreis ein Selektionselement (4), das durch seinen Ausgangskanal (6) mittels der Leitungen (T') an die Bremsen angekoppelt ist. Sein erster Eingangskanal (7) ist durch die Leitung (T) mit dem Hauptzylinder verbunden, und mit seinem zweiten Eingangskanal (8) mittels einer weiteren hydraulischen Leitung mit dem zweiten Generator. Das erwähnte Selektionselement sichert die Umschaltung des Bremskreises (2) entweder auf den ersten (1) oder auf den zweiten Generator (3). Die Diebstahlsicherung ist bezüglich des Selektionselements (4) dadurch gekennzeichnet, daß derselbe eine Bohrung (4A) aufweist, in der sich ein Kolben befindet (11), die beiden Eingangsöffnungen (7) und (8) liegen gegenüber und führen axial in die Bohrung (4A), jeweils am einen und anderen Ende. Der Ausgangskanal (6) befindet sich radial zu dieser Bohrung und mündet so in dieselbe, daß die von einem der Generatoren (1, 3) kommende Flüssigkeit den Kolben (11) verschiebt, um so den Eintritt von Flüssigkeit die vom anderen Generator (3, 1) kommt zu unterbinden. Auf diese Weise wird die automatische Umschaltung der vom Generator kommenden Flüssigkeit in Richtung der Fahrzeugbremsen (2). Der zweite Generator (3) wird vom Überwachungskreis (5) gesteuert, falls dieser einen rechtswidrigen Gebrauch des Fahrzeugs feststellt.

2. Diebstahlsicherung gemäß Anforderung 1, gekennzeichnet durch ein Verzögerungselement (1) um die Blockierzeit der Räder zu begrenzen, was mit Hilfe eines zweiten Generators (3) erreicht wird.

3. Diebstahlsicherung gemäß Anforderung 1, deren Hauptmerkmal ein zweiter Generator (3) ist, bestehend aus einem Hauptzylinder, welcher durch mechanische, irreversible Übertragung gekoppelt mit einem Elektromotor (10), angetrieben wird. Dieser Motor wird durch den Überwachungskreis mit Energie versorgt. Die genannte Übertragung verwandelt die Rotationsbewegung des Motors in eine Längsverschiebebewegung, die ihrerseits auf den Kolben (12) des genannten Hauptzylinders übertragen wird.

4. Diebstahlsicherung gemäß Anforderung 3, dadurch gekennzeichnet, daß die mechanische Übertragung durch eine Schraube (13) und eine Schraubenmutter (14) geschieht. Letztere formschlüssig mit dem Kolben (12), so daß ein anhaltender Druckanstieg im Bremskreis ermöglicht wird.

5. Diebstahlsicherung gemäß Anforderung 1, gekennzeichnet durch die Elemente (33, 37), die dazu dienen den Druck in den hydraulischen Bremselementen (2) zu begrenzen, wenn diese mittels des zweiten Generators (3) unter Druck gesetzt werden.

6. Diebstahlsicherung gemäß Anforderung 4, die sich dadurch auszeichnet, daß die genannte Schraubenmutter (14) und der genannte Kolben (12) in eine Verkleidung montiert sind, die ein Lager (23) für die Schraube (13) besitzt. Die genannte Schraube ist derart befestigt, daß sie sich im Vergleich zur Verkleidung (15) und zum Lager (23) längsverschieben kann.

7. Diebstahlsicherung gemäß Anforderung 5, deren Hauptmerkmal in den Mitteln zur Druckbegrenzung bestehen. Diese Mittel sind die folgenden: ein elastischer Anschlag (33) übt in Richtung auf die Schraubenmutter (14) und auf die axiale Verlängerung der Schraube (13) eine axiale Kraft aus, deren Intensität von seiner Verformung abhängt. Ein Meßfühler (37), der die Verformung des Anschlags registriert und der in diesem Fall den Stillstand des Motorenelements (10) steuert.

8. Diebstahlsicherung gemäß Anforderung 1, 3, die sich dadurch auszeichnet, daß der Hauptzylinder des zweiten Generators (3), die irreversible Übertragung und das Motorelement in einen Kasten (19) montiert sind. Dieser Kasten beinhaltet auch eine Bremsflüssigkeitsreserve die mit dem Hohlraum (15A) des besagten Hauptzylinders kommuniziert.

9. Diebstahlsicherung gemäß Anforderung 1, die sich dadurch auszeichnet, daß der Überwachungskreis (5) besteht aus:

– einem elektronischen Analyse- und Kontrollteil (39), der mindestens ein selbstschützendes Band überprüft, bestehend aus einer ersten Meßfühlergruppe (40), die mit dem Kasten (19) der Vorrichtung verbunden ist, außerdem aus einer kurzen Überwachungsschleife, die eine zweite Meßfühlergruppe (41) beinhaltet, welche mit der Motorhaube und dem Kofferraumdeckel in Verbindung steht; des weiteren aus einer dritten Meßfühlergruppe (42), die mit mindestens einer Fahrzeugtür verbunden ist, des weiteren aus mindestens einer Überwachungsschleife, bestehend aus dem Meßfühler (43A) für den hydraulischen Druck, der wiederum mit dem Fahrzeugmotor verbunden ist; anschließend aus mindestens einer Überwachungsschleife mit Bewegungsmeßfühler (43B), der mit einem Fahrzeugrad in Verbindung steht, und mindestens einer Überwachungsschleife (43C) für die elektrischen Leitungen, verbunden mit dem elektrischen Stromkreis des Fahrzeugs,

– einem Code-Empfänger (47) der elektrisch an den Teil (39) angeschlossen ist,

– einer ersten Leistungskontrollstufe (46), die elektrisch mit dem Abblendlicht und der Hupe verbunden ist, und einer zweiten Leistungskontrollstufe (45), die auf elektrischem Wege mit dem Teil (39) und dem Motor (10) des Hauptzylinders des zweiten Generators (3) verbunden ist.

Fig 1

9

Fig 2

EP 0 165 889 B1

FIG. 3

Fig 4

FIG. 5